# EUROPEAN PATENT APPLICATION

(11) **EP 4 636 016 A1**
(43) Date of publication of application: **22.10.2025**
(21) Application number: 25170561.2
(22) Date of filing: 15.04.2025
(51) Int. Cl.: C08J 5/24, E04B 1/94

(54) **PROCESS FOR MAKING A FIRE-RESISTANT COMPOSITE MATERIAL AND RELATED HIGH STRENGTH FIRE-RESISTANT COMPOSITE MATERIAL**

(30) Priority: 16.04.2024 IT 202400008662
(71) Applicant: RCN S.r.l., 20127 Milano (IT)
(72) Inventor: CANTELLA, Michele, 20127 MILANO (IT); NOÈ, Karen, 20127 MILANO (IT)
(74) Representative: Brunacci, Marco

(57) **Abstract**

The present invention relates to a process for making a fire-resistant composite material and related high strength fire-resistant composite material made.

## Description

### Technical Field

The present invention relates to a process for making a fire-resistant composite material and related high strength fire-resistant composite material made.

### Background Art

In some industries, such as e.g. aerospace or construction, components or coatings are known to be subjected to high mechanical and/or thermal stresses during their normal use. Such components must also be able to withstand the heat generated by flames during any fire, ensuring the soundness thereof until emergency procedures are completed.

In general, these components must meet three main criteria:
- high mechanical strength: materials must be able to withstand high mechanical stress without deforming or breaking. This is especially important if components are to bear heavy loads or experience stress during their use;
- good heat resistance: materials must be able to withstand high temperatures without suffering structural damage or losing their physical and mechanical properties. This is essential if components are to operate in high-temperature environments and be subjected to heat-generating processes;
- lightness: materials must be lightweight so as not to add excessive weight to the construction in which they are used. This is important for ensuring that the construction is energy efficient, easy to transport or maneuver, and not subject to excessive loads.

Materials that can provide an optimal combination of mechanical strength, heat resistance and light weight are, e.g., carbon fiber composite materials.

One drawback of these types of material, however, is the high cost of the base backing layer. In fact, for a weight of 200 g/sqm, the cost can range around 35 €/sqm and more.

### Description of the Invention

The Applicant, a company already experienced in the processing of pre-pregs and composite laminates, has ascertained that, by properly treating a backing layer of material other than those shown above, it was then possible to make a composite material having high mechanical strength, high heat resistance and light weight at a much lower cost.

The object of the present invention is therefore to have a material with high mechanical and thermal resistance, which can be effectively used in the field of aeronautical, building and/or furniture construction, as well as in other fields, in order to obtain composite materials that are highly resistant to both mechanical stress and heat and, at the same time, having very low weight and cost compared with materials of known type having substantially the same properties.

This object is achieved by the invention through a process for making a fire-resistant composite material having the characteristics set forth in claim 1.

The aforementioned objects are also achieved by the high strength fire-resistant composite material in accordance with claim 8.

Other characteristics and advantages of the present invention will become more apparent from the following description of a preferred, but not exclusive, embodiment of the process for making a fire-resistant composite material and related high strength fire-resistant composite material.

### Embodiments of the Invention

The process for making a fire-resistant composite material according to the present invention first provides for the preparation of a binder matrix that will be used as an impregnating fire-resistant composition to be later associated with a backing layer.

The binding matrix is made by first having an acetone bath *(phase* 1) within which a predetermined amount of natural inert material is added (*phase 2*). The acetone bath with the natural inert material is then mixed *(phase* 3) for a preferred time period of 20 to 120 minutes, preferably 60 minutes.

Next, a predetermined amount of synthetic aramid fiber powder *(phase* 4) is added to the acetone bath and further mixing (*phase 5*) is carried out for a preferred time period of 10 to 40 minutes, preferably 20 minutes.

Conveniently, the addition of synthetic aramid fiber powder (*phase 4*) and natural inert material *(phase* 2) in the acetone bath can be done simultaneously.

There is then a phase in which a predetermined amount of phenolic resin *(phase 6*) is placed in the bath with associated further mixing *(phase 7*) for a preferred time period of 100 to 140 minutes, preferably 120 minutes. At the end of *phase 7*, the composition of the binder matrix is thus ready to be associated with the backing layer.

According to a preferred embodiment, the fire-resistant composition is made using:
- 20% to 50% acetone by weight of the total weight,
- 20% to 40% natural inert material by weight of the total weight,
- 5% to 15% synthetic aramid fiber powder by weight of the total weight,
- 40% to 70% phenolic resin by weight of the total weight, configured to impart insulating and fire-resistant properties to the composition.

Preferably, the natural inert material is kaolin. Kaolin promotes an increase in the chemical stability and cross-linking of the matrix, thus improving the overall mechanical strength of the material and prolonging the curing time thereof, resulting in an increase in the overall durability of the composite material.

Conveniently, synthetic aramid fiber powder is kevlar powder. In fact, the Applicant has ascertained that kevlar powder, which comes from cutting processes but is normally intended for disposal in landfills as special waste, can be recovered and transformed into an ingredient able to increase the degree of fire resistance of the composite material.

Once the fire-resistant composition is ready, it can be coupled to the backing layer to make the high strength fire-resistant composite material that is covered by the present invention.

In detail, the binder matrix is configured to impregnate to the backing layer by means of the additional phases which will be described in detail later in this disclosure.

Preliminarily, it should be specified that the backing layer advantageously comprises a sheet of glass fiber fabric. The fabric is preferably made by weaving glass fiber threads.

According to some variations, the backing layer may comprise material selected from the group comprising: glass-coated fabric threads, glass-coated polymer threads, glass-coated non-woven threads.

According to other variations, the backing layer fabric may comprise a combination of materials selected from the group comprising: glass fiber fabric threads, glass coated fabric threads, glass coated polymer threads, glass coated non-woven fabric threads.

Preferably, glass fiber fabric with a density of between 100 and 500g/sqm, preferably 300g/sqm of the type distributed by the company HEXCEL CORPORATION under the name HEXFORCE^{®} can be used for the backing layer. The Applicant normally purchases reels of 400 meters in length and about 1.2 meters in width.

The process further comprises the following phases:
- providing a backing layer, preferably wound in a respective reel (*phase 8*),
- making the backing layer move forward (*phase 9*),
- impregnating the backing layer with the fire-resistant composition *(phase 10*), and
- heating the impregnated backing layer (*phase 11*) for a predetermined period of time.

Specifically, the *phase 10* comprises the following sub-phases:
- temporarily dipping the backing layer in a container containing the fire-resistant composition (*phase 10a*),
- rolling the backing layer (*phase 10b*).

Specifically, the *phase 10b* involves the backing layer passing through a rolling station comprising two rollers in reverse rotation with each other and separated by a predetermined distance of 3 or 4 tenths of a millimeter. This distance can be appropriately varied by moving one of the two rollers away from/closer to the other (or both) in order to control the thickness of the impregnated composition on the backing layer.

In accordance with a preferred embodiment, the thickness of the composite material at the end of the process is of between 50 µm and 400 µm, preferably 200 µm. It cannot, however, be ruled out that the thickness may be increased at will by coupling several sheets of composite material together.

Preferably, *phases 9, 10* and *11* are carried out by unwinding the backing layer longitudinally by a predetermined length. Specifically, the backing layer, after being dipped (*phase 10a*) and rolled (*phase 10b*), is placed within a heating station (*phase 11*) to heat it to predetermined temperatures so that the cross-linking process starts and the impregnation process is completed.

Preferably, the *phase* 9 of making the backing layer move forward is carried out by means of an appropriate towing fabric tied to the backing layer downstream of the rolling station. The towing fabric is wound by means of one or more appropriate winding rollers arranged downstream of the heating station thus allowing the towing of the backing layer.

Advantageously, the *phase 11* of heating the backing layer within the heating station comprises the following sub-phases:
- *phase 11a*: making the backing layer move forward by a first stretch and heating it to a temperature of between 80°C and 130°C, preferably 100°C,
- *phase 11b:* making the backing layer move forward by a second stretch and heating it to a temperature of between 120°C and 150°C, preferably 140°C,
- *phase 11c:* unwinding and making the impregnated backing layer move forward by a third stretch and heating it to a temperature of between 120°C and 150°C, preferably 140°C,
- *phase 11d:* unwinding and making the backing layer move forward by a fourth stretch and heating it to a temperature of between 120°C and 150°C, preferably 140°C.

At the end of *phase 11,* the impregnated backing layer exits the kiln and is allowed to cool down to room temperature (*phase 12*) so that it can finally be rewound into a respective reel. Specifically, the *phase 12* involves the backing layer contacting one or more cooling rollers wherein, at least in one, there is a thermoregulation channel within it for the circulation of a thermo-regulating fluid, such as e.g. water, at a preferred temperature of between 10°C and 30°C, preferably 20°C.

### Heating station

It should be specified that the heating station extends along a mainly longitudinal direction to allow moving forward and heating the backing layer horizontally along the four stretches listed above, the latter being substantially of equal length and distributed one after the other along the station. For this purpose, the heating station comprises a main framework having a total length of about 20 meters, preferably 16 meters normally closed (openable laterally by appropriate panels) wherein the backing layer moves forward internally supported by an appropriate (chain or belt) conveyor. The conveyor is preferably of the type of crossbars which are spaced several meters apart from each other to support the backing layer and allow it to be heated from both sides.

For the selective heating of the backing layer along the four stretches, the heating station comprises heating means (preferably of the coil type) arranged inferiorly to the conveyor. Such coil is of the tube type within which steam flows at a temperature of about 140°C. In this regard, the coil is divided into groups (e.g., a number of four) so that the backing structure is radiated at the different temperatures mentioned above with reference to *phase 11*. Preferably, the heating means of the coil type have a width greater than the width of the backing layer, substantially equal to the width of the heating station framework so as to effectively radiate the overall lower side of the backing layer.

According to one version, the heating station comprises a plurality of blower sets configured to send hot air to the backing structure, preferably to the upper side of the backing structure. For this purpose, the blower sets are four in number and arranged at the top of the framework, one following the other along the aforementioned four stretches. It cannot, however, be ruled out that the blower sets may be fewer or more than four in number. Advantageously, each blower set heats the air by means of respective coils suitably heated to a temperature of about 140°C.

In detail, the first blower set comprises a first fan arranged substantially at the first stretch and configured to draw in air from the rolling station (in order to draw in any toxic flue gas from the composition). The first blower set also comprises a first delivery hose to send hot air at the first stretch of the heating station at a temperature of between 120°C and 140°C, preferably 130°C.

The second, third and fourth blower sets have respective delivery hoses to send hot air at a temperature of between 160°C and 220°C, preferably 190°C, to the second, third and fourth stretches of the heating station, respectively. Preferably, the second, third and fourth blower sets are in communication with each other and receive heated air from an afterburner connected to an intake fan, the latter being arranged at the fourth stretch at the end of the heating station. The intake fan is substantially configured to draw in the process flue gas at the end of the last stretch in the heating phase (*phase 11*) and send it to the afterburner so that it is burned at a temperature of about 750°C and thus avoid harmful emissions to the atmosphere.

### Compositional variations

It should be specified that several variations can be introduced to the above listed process phases in order to make composite materials slightly different from each other for specific uses.

For example, in accordance with a first embodiment, the backing layer is associable with a binding matrix comprising:
- between 35% and 45% acetone by weight of the total weight,
- between 35% and 45% kaolin by weight of the total weight,
- between 5% and 15% kevlar powder by weight of the total weight,
- between 45% and 55% phenolic resin by weight of total weight.

In such first embodiment, the composite material thus made is "ready-to-use" as it can be used without the need for further processing or preparation.

In accordance with a second embodiment, the backing layer can be associated with a binding matrix comprising:
- between 25% and 35% acetone by weight of the total weight,
- between 20% and 30% kaolin by weight of the total weight,
- between 5% and 15% kevlar powder by weight of the total weight,
- between 65% and 75% phenolic resin by weight of the total weight.

In this second embodiment, the composite material was used to be coupled in multiple layers to make laminated panels for use in aerospace and/or construction. In the tests conducted by the Applicant, the composite material of the invention was shown to meet the requirements of EN 16733:2016 in which the propensity of the product to be subjected to continuous constant fire was determined. In these tests, two samples with a weight of 300 g/sqm were analyzed. Tests were passed: the samples showed no propensity for continuous flameless burning.

It has in practice been ascertained that the described invention achieves the intended objects and in particular the fact is emphasized that by means of the process of the invention it is possible to make a sheet of fire-resistant composite material that shows characteristics similar to those of far more expensive materials, while maintaining high mechanical and heat resistance properties. The kinds of applications of the composite material are potentially endless, and obviously a technician in the field, in order to meet contingent and specific needs, will be able to make numerous modifications and variations to the examples of embodiments described above, all of which, however, are contained within the scope of protection of the invention as defined by the following claims.

## Claims

1. Process for making a fire-resistant composite material, comprising the steps of:
- providing a fire-resistant composition made through at least the following steps:
· mixing a predetermined amount of natural inert material in an acetone bath,
· mixing a predetermined amount of synthetic aramid fiber powder in said acetone bath,
· mixing a predetermined amount of phenolic resin in said acetone bath,
- providing a backing layer,
- impregnating said fire-resistant composition in said backing layer,
- heating said impregnated backing layer for a predetermined period of time,
- letting said impregnated backing layer cool down to room temperature.

2. Process according to claim 1, wherein the steps of
· mixing a predetermined amount of natural inert material in an acetone bath,
· mixing a predetermined amount of kevlar powder in said acetone bath, and
· mixing a predetermined amount of phenolic resin in said acetone bath, are carried out in succession.

3. Process according to claim 1 or 2, wherein said fire-resistant composition is made using:
20% to 50% acetone by weight of the total weight,
20% to 40% natural inert material by weight of the total weight, preferably kaolin,
5% to 15% synthetic aramid fiber powder by weight of the total weight, preferably kevlar powder,
40% to 70% phenolic resin by weight of the total weight.

4. Process according to claim 3, wherein said fire-resistant composition is made using:
between 35% and 45% acetone by weight of the total weight,
between 35% and 45% kaolin by weight of the total weight,
between 5% and 15% kevlar powder by weight of the total weight,
between 45% and 55% phenolic resin by weight of the total weight.

5. Process according to claim 3, wherein said fire-resistant composition is made using:
between 25% and 35% acetone by weight of the total weight,
between 20% and 30% kaolin by weight of the total weight,
between 5% and 15% kevlar powder by weight of the total weight,
between 65% and 75% phenolic resin by weight of the total weight.

6. Process according to one or more of the preceding claims, wherein said backing layer is provided wound in a respective reel, and
wherein said steps of
· impregnating said resin mass in said backing layer, and
· heating said impregnated backing layer for a predetermined period of time, are carried out by unwinding said backing layer.

7. Process according to the preceding claim, wherein said step of heating said impregnated backing layer for a predetermined period of time comprises the following sub-steps:
·making said impregnated backing layer move forward by a first stretch and heating it to a temperature of between 80°C and 130°C, preferably 100°C,
·making said impregnated backing layer move forward by a second stretch and heating it to a temperature of between 120°C and 150°C, preferably 140°C,
·unwinding and making said impregnated backing layer move forward by a third stretch and heating it to a temperature of between 120°C and 150°C, preferably 140°C,
·unwinding and making said impregnated backing layer move forward by a fourth stretch and heating it to a temperature of between 120°C and 150°C, preferably 140°C.

8. Fire-resistant composite material comprising a backing layer impregnated with a fire-resistant composition comprising:
20% to 40% natural inert material by weight of the total weight,
5% to 15% synthetic aramid fiber powder by weight of the total weight,
40% to 70% phenolic resin by weight of the total weight.

9. Fire-resistant composite material according to the preceding claim, comprising a backing layer impregnated with a fire-resistant composition comprising:
20% to 50% acetone by weight of the total weight.

10. Composite material according to claim 8 or 9, wherein the backing layer is selected from the group comprising: glass fiber fabric threads, glass coated fabric threads, glass coated polymer threads, glass coated non-woven fabric threads.
